Europäisches Patentamt

**(19)** European Patent Office

Office européen des brevets

**(11)** Publication number: **0 141 622**
**B1**

**(12)** EUROPEAN PATENT SPECIFICATION

**(45)** Date of publication of patent specification: **02.01.91**

**(51)** Int. Cl.⁵: **C 08 F 6/12**

**(21)** Application number: **84307335.4**

**(22)** Date of filing: **25.10.84**

**(54)** Recovery of polymer from polymer slurry.

**(30)** Priority: **28.10.83 JP 203057/83**

**(43)** Date of publication of application:
**15.05.85 Bulletin 85/20**

**(45)** Publication of the grant of the patent:
**02.01.91 Bulletin 91/01**

**(84)** Designated Contracting States:
**DE FR GB IT NL**

**(56)** References cited:
**GB-A-1 583 074**
**US-A-3 468 863**

**(73)** Proprietor: **SUMITOMO CHEMICAL COMPANY, LIMITED**
**Kitahama 4-chome 5-33**
**Chuo-ku Osaka 541 (JP)**

**(72)** Inventor: **Matsuyama, Kiyoshi**
**7-19, Hoshigoe-cho**
**Niihama-shi Ehime (JP)**
Inventor: **Suzuki, Takatoshi**
**1-9-1043, Yushudai-nishi**
**Ichihara-shi Chiba (JP)**
Inventor: **Chigusa, Takeshi**
**20-1, Hoshigoe-cho**
**Niihama-shi Ehime (JP)**

**(74)** Representative: **Moore, Anthony John et al**
**Gee & Co. Chancery House Chancery Lane**
**London WC2A 1QU (GB)**

## Description

This invention relates to a method of recovering a polymer from a polymer slurry which is composed of an olefinic polymer and a hydrocarbon solvent having a small number of carbon atoms.

Many industrial methods of polymerizing olefins in hydrocarbons having five carbon atoms or less are known: typical examples of such methods include a method which comprises polymerizing ethylene in liquefied hydrocarbons having four carbon atoms (Philips' method); a method which comprises polymerizing propylene in liquefied propylene (Japanese Published Examined Patent Applications Nos. 17184/63, 24479/65 and 39998/76); and a method which comprises copolymerizing ethylene and propylene in liquefied propylene to obtain ethylenepropylene rubbers (Montedison's method, as described for example in Japanese Patent Publications Nos. 3291/1962 and 10491/1961).

These methods all employ hydrocarbon having a small number of carbon atoms as solvent in a polymerization vessel; so consequently a high pressure of 0,49 MPa (5 kg/cm²G) or higher must generally be maintained during polymerization.

To recover the polymer from the polymer slurry by removing the solvent, a method which comprises reducing the pressure of the system from high pressure thereby to vaporize the solvent, the so-called flash method, has been adopted because the solvent is easily vaporizable see, for example, Japanese Published Examined Patent Application 24479/65).

In recovering the polymer, the polymer slurry obtained by polymerization is flashed as it is or after it has been washed. Washing is one means of removing low molecular weight polymers, polymers having poor tacticity and catalyst residues, all of which are soluble in the solvent; and of eliminating characteristics that have an adverse influence upon the physical properties of the final products formed from the polymer, for example, film stickiness, service stability and process stability.

In this direct flash method of treating the polymer slurry, it is necessary to vaporize a large quantity of solvent, compress the vaporized solvent and, if desired, purify the solvent by means for example of distillation; the energy thus consumed forms a significant proportion of the energy required for the overall process.

For this reason, a method which comprises sedimenting and condensing the polymer in a polymerization vessel or in a washing vessel and discharging the condensed polymer slurry has also been devised in order to reduce the amount of the solvent to be vaporized. To enable the polymer to be discharged as a slurry, however, a large quantity of the solvent must be discharged with the polymer.

An aim of the present invention is to greatly reduce the energy consumption required for polymer recovery, as compared with conventional methods.

According to the present invention we provide a method of recovering a polymer from a polymer slurry comprising an ethylene or propylene homopolymer or olefinic copolymer thereof and a hydrocarbon solvent having from 3 to 5 carbon atoms by passing the slurry through a pressure vessel containing a filter, characterised in that the polymer slurry is continuously supplied under pressure, after optional washing, to a filter having a filtering element having a filtering surface on which a layer of polymer particles is retained, and above which is a cake-forming portion, all within a high pressure vessel, whereby a layer of polymer particles are retained on the filtering surface, these polymer particles form a cake within the portion and the cake overflow from the filter to be recovered intermittently or continuously as wet cake from within the vessel and most of the solvent passes through the filter for recovery.

Examples of the hydrocarbon having 3 to 5 carbon atoms used as the solvent in the present invention include propylene, propane, n-butane, isobutane, 1-butene, 2-butene, isobutylene, n-pentane, isopentane, cyclopentene and a pentene.

Examples of other olefins copolymerizable with ethylene include propylene, 1-butene, hexene and 4-methylpentene-1; and with propylene, include ethylene, 1-butene, hexene and 4-methylpentene-1. Catalytic systems normally used for polymerization are Zielgler-Natta catalysts which are well known in the art and examples of which include combinations of metal compuonds such as Ti, V or Cr with organoaluminium compounds. However, there is no particular limitation on the nature of the catalyst as long as the catalysts are of high activity and give polymers in high yield.

The polymer slurry used in the present invention may be a polymer slurry that has been previously obtained by a polymerization process using the hydrocarbon solvent. The concentration of the slurry may be in the range of from 200 to 700 g of polymer per litre of solvent but it is not limited thereto.

When the polymer slurry is previously washed any known washing method may be adopted. For example, there is a method which comprises charging the polymer slurry in a vesel equipped with a stirrer, adding large quantities of solvent thereto, if desired, together with catalyst deactivator and other auxiliary agents, stirring for a detemined period of time, then setting and removing the supernatant solvent, this procedure being repeated, if desired. For continuous washing, it is desirable to use a countercurrent washing tower as shown in Japanese Published Unexamined Patent Applications Nos. 79589/75 and 3679/77.

For separation of the polymer particles and the solvent from the polymer slurry, a continuous-type filter is employed.

If a batch-type filter were to be employed, a cycle comprising supply of the polymer slurry, filtration (separation and recovery of the solvent) and discharge of the cake (recovery of the polymer) must be repeated. If the pressure is close to atmospheric and the solvent is aqueous, batch-type filtration may sometimes work, but when a batch-type filter is applied to the polymer slurry udner high pressure as in the present invention, large and expensive equipment must be employed and the cake can be discharged only with difficulty, so that the batch-type filtration is not viable in the present invention.

Accordingly a continuous-type filter is used in the present invention, into which the polymer slurry is continuously or intermittently supplied while maintaining a small amount of the polymer on the filtration surface thereof, whereby the solvent is passed through the filtration surface, taken out of the filter and thus recovered. The polymer particles are accumulated in order and ultimately overflown from the opening, the particles thus being recovered as wet cake.

The invention will now be described in more detail with reference to the accompanying diagrammatic drawings in which

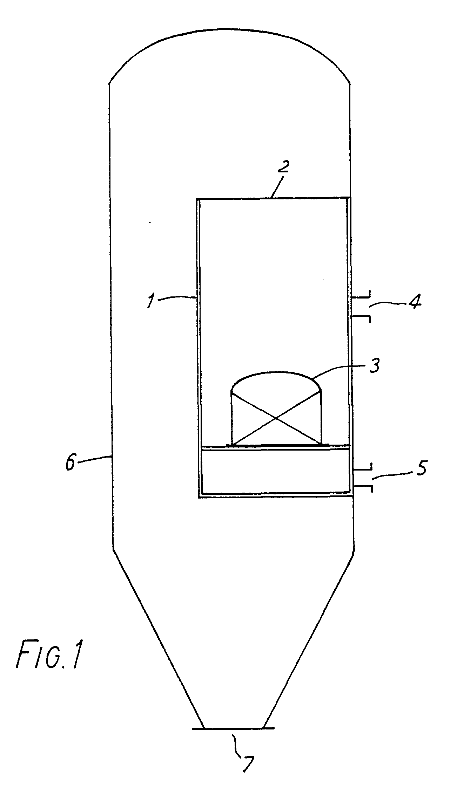

Figure 1 is a cross-sectional schematic view of the filter employable in the present invention;

Figure 2 is a flow chart illustrating an embodiment of the present invention; and

Figure 3 is a flow chart illustrating another embodiment of the present invention wherein washing of the polymer slurry is carried out.

The whole of filter 1 is mounted on the inside of high pressure vessel 6. The polymer particles are present around filtering element 3 having a filtering surface. The polymer slurry is fed from inlet 4, and the solvent is passed through the filtering element 3 and then discharged through discharge outlet 5.

The polymer particles are converted into a cake which is accumulated on the filtering element 3 to push the previously formed cakes upwards and overflown from upper portion 2. The overflown cake is retained at the bottom of the high pressure vessel 6 and intermittently or continuously withdrawn from discharge outlet 7.

The filter is characterized by the following:

(1) Filtration is performed in a stage where the polymer particles are always present around the filtering element 3 so that clogging of the filtering element 3 can be prevented.

The polymer slurry contains polymer particles of 10 µm or less in addition to polymer particles having a relatively large size of 50 to 2,000 µm, and fine powders of catalyst residues and, therefore, the filtering element generally tends to become clogged in conventional procedures.

When the filtering element is clogged, it is necessary to take some measure, e.g., exchange of the filtering element per se or cleaning of the filtering element by frequently flowing a washing liquid from the back surface of the filtering element. However, if the polymer particles are always present around the filtering element as in the present invention, the polymer particles per se form a primary filtering layer to prevent fine powders from reaching the filtering element. Thus, clogging of the filter can be prevented.

(2) The polymer particles are overflown from the upper portion 2 and accordingly, it is not necesary to discontinue the flow of the polymer slurry to the filter. Therefore, the overall process for manufacturing the polymer can be smoothly operated.

(3) The amount of the solvent in the cake recovered is minimized so that the solvent can be easily vaporized under reduced pressure to render the removal easy.

To effect the vaporization, supply of heat insufficient to vaporize the solvent can easily be supplemented by heating the exhaust lines subsequent to the discharge outlet 7 at the bottom of the high pressure vessel 6.

As the filtering element, a cylindrical filter having pleats, a cylindrical filter of flat type, a filter of tube type, a filter of disc type, a filter of leaf disc type can be employed.

As a matter of course, the filtering area is determined depending upon the amount of the polymer slurry to be treated. Needless to say, it is required that the filter should have sufficient strength to withstand the impact of the polymer particles and the filtration pressure.

The accuracy of filtration required for the filter is determined depending upon the particle sizes exhibited by the polymer slurry but it is generally advantageous to use a filter having a filtration accuracy in a diameter range of 2 to 200 µm when glass beads are passed through a filter medium in accordance with the JIS B8356 method.

As such filter media, there can be used those obtained by molding by, for example, compression sintering or vacuum sitering a metal having strong resistance to rust, such as powdery particles of, e.g., 18—8 stainless steel, Hastelloy, Carpenter, Inconell, Monel or nickel or fine fibers or metal mesh having a small pore size.

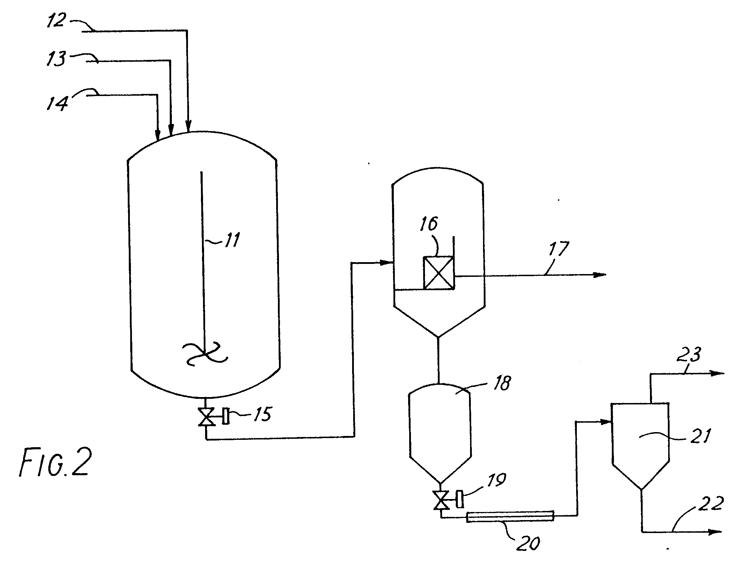

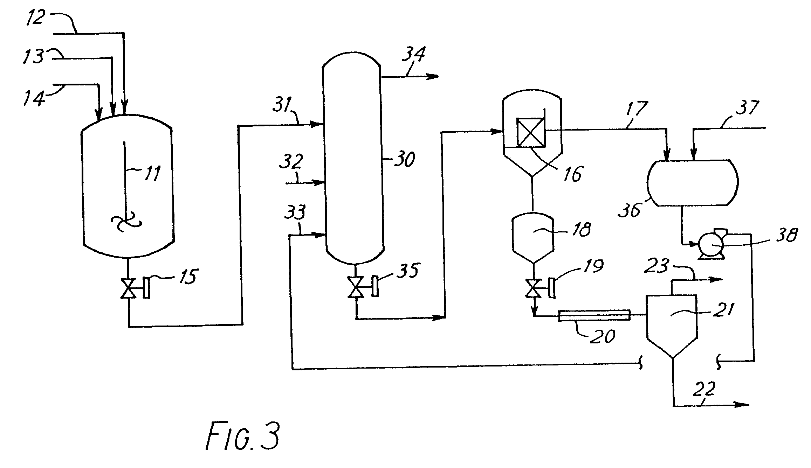

Next examples of manufacturing polymer in accordance with the present invention will be described with reference to Figures 2 and 3.

In Figure 2, monomers (ethylene or propylene or other comonomers), a solvent and a catalyst are continuously or intermittently supplied to polymerization vessel 11 through lines 12, 13 and 14, respectively, whereby polymerization is carried out to form a polymer slurry. The polymer slurry is continuously or intermittently withdrawn through discharge valve 15 and then supplied to filter 16. The polymer slurry is filtered, and the solvent of the filtrate is discharged through line 17. The solvent of the filtrate may be recycled to the polymerization vessel 11 through the line 13 as it is or after purification. The polymer assumes a cake-like state, overflows from the filter 16 and then enters into cake-receiving hopper 18. The cake is intermittently or continuously withdrawn from the hopper 18 from discharge valve 19. The pressure is then reduced, and the cake is passed through heating line 20. The solvent remaining in the polymer cake is gasefied due to the pressure reduction and the heating. The gas is separated in separator 21 and then discharged through line 23. On the other hand, the polymer particles are withdrawn through line 22.

Figure 3 illustrates an embodiment in which countercurrent washing tower 30 is used to enable an additional washing step to be included.

The polymer slurry is supplied to the countercurrent washing tower 30 through line 31. A solvent for washing is supplied through line 33. Through overflow line 34, the solvent containing soluble polymers and catalyst residues is discharged. The washed polymer slurry is continuously or intermittently withdrawn through discharge valve 35 and supplied to the filter 16. The solvent of the filtrate coming from the filter 16 is treated in a manner as explained for Fig. 2 except that the solvent is used as the solvent for washing throuugh the line 17 and buffer tank 36. In Figure 3, 32 indicates a line for supplying a catalyst deactivator to the countercurrent washing tower 30; 37 indicates a line for supplementing the washing solvent; and 38 indicates a pump for supplying the solvent to the countercurrent washing tower 30 from the buffer tank 36 through the line 33.

The present invention will be explained in more detail with reference to the Examples below.

Example 1

Based on the flow chart shown in Figure 2, the procedure was performed as follows.

(1) Preparation of Polymer Slurry of Propylene:

As the polymerization vessel 11, a stirring vessel of 30 m³ was used, and a catalyst system composed of about 0.11 kg/hr or a titanium trichloride catalyst (prepared in accordance with Example 1 of U.S. Patent 4,165,298), about 1.0 kg/hr of diethylaluminum chloride and 40 g/hr of methyl methacrylate was charged therein in liquid propylene, followed by continuous polymerization of propylene at 70°C. The polymer slurry withdrawn from the polymerization vessel 11 comprises 1,200 kg/hr on average of a granular polymer, 7.5 kg/hr on average of a so-called atactic polymer soluble in liquid propylene and 1,350 kg/hr on average of unreacted liquid propylene containing the catalyst system charged.

(2) Filtration of Polymer Slurry

The vessel of the filter 16 had an inner diameter of about 500 mm and a length of 1 m and encased a 16 step-discoid leaf-disc type filter element (having about 1 m² of filtering area) on the inside thereof.

The polymer slurry prepared in (1) above was continuously supplied to the filter 16.

Filtration proceeded smoothly, and 850 kg/hr on average of liquid propylene as the solvent was recovered from the line 17. In the hopper 18, a cake composed of 1,200 kg/hr on average of a granular polymer and 500 kg/hr on average of propylene was recovered.

The cake was intermittently discharged through the discharge valve 19, and propylene was gasefied in the heating line 20. The gas was separated from the polymer in the separator 21. The polymer was withdrawn at temperatures of 60 to 70°C through the line 22 in which propylene was gaseous and containers in such a trace amount that it was present in spacings of the polymer particles. The polymer particles had a mean particle diameter of 600 μm, in which the amount of fine powders having 100 μm or less was approximately 0.1%.

Gaseous propylene was recovered by a compressor through the line 23.

The amount of gaseous propylene recovered was 500 kg/hr on average.

In accordance with the flow chart shown in Figure 2, the operation was continued for 3 days. The operation proceeded smoothly without clogging of the filter.

When the polymer slurry was flash vaporized as it was without using the filter of the present invention, 1,350 kg/hr of propylene in the gaseous state was recovered on average; accordingly, the amount of gaseous propylene recovered is reduced to 37% according to the present invention.

Example 2

Based on the flow chart shown in Figure 3, the procedure was performed as follows.

(1) Preparation and Washing of Polymer Slurry:

The preparation of the polymer slurry was performed in a manner similar to Example 1. The polymer slurry was supplied to the countercurrent washing tower 30 through the line 31, and 1.5 kg/hr of isobutanol was introduced from the line 32. 1,200 kg/hr of propylene of 65°C for washing was continuously supplied from the line 33.

From the line 34, 1,600 kg/hr on average of liquid propylene containing catalyst residues, atactic polymers and isobutanol was discharged.

The polymer slurry withdrawn from the discharge valve 35 positioned at the lower portion of the countercurrent washing tower 30 comprised 1,200 kg/hr on average of a granular polymer and 950 kg/hr on average of liquid propylene.

(2) Filtration of Polymer Slurry:

A filter having the same structure as in Example 1 was used, and the polymer slurry prepared in (1) above was continuously supplied to the filter 16.

Filtration proceeded smoothly. From the line 17, 450 kg/hr on average of liquid propylene solvent was recovered. In the hopper 18, a cake composed of 1,200 kg/hr on average of a granular polymer and 500 kg/hr on average of propylene was recovered.

Subsequently, the cake was treated in a manner similar to Example 1.

Gaseous propylene was passed through the line 23 and recovered with a compressor. The amount recovered was 500 kg/hr on average.

When the polymer slurry was flash vaporized as it was without using the filter of the present invention, 950 kg/hr off propylene in the gaseous state was recovered, on average. Accordingly, the amount of gaseous propylene recovered is reduced to 53% according to the present invention.

This Example was worked over a long period of 1 month, during which no clogging occurred in the filter and filtration proceeded satisfactorily.

## Claims

1. A method of recovering a polymer from a polymer slurry comprising an ethylene or propylene homopolymer or olefinic copolymer thereof and a hydrocarbon solvent having from 3 to 5 carbon atoms by passing the slurry through a pressure vessel containing a filter, characterised in that the polymer slurry is continuously supplied under pressure, after optional washing, to a filter (1) having a filtering element (3) having a filtering surface on which a layer of polymer particles is retained, and above which is a cake-forming portion (2), all within a high pressure vessel (6), whereby a layer of polymer particles are retained on the filtering surface, these polymer particles form a cake within the portion (2) and the cake overflows from the filter to be recovered intermittently or continuously as wet cake from within the vessel (6) and most of the solvent passes through the filter (1) for recovery.

2. A method as claimed in Claim 1, wherein said hydrocarbon solvent is selected from propylene, propane, n-butane, isobutane, 1-butene, 2-butene, isobutylene, n-pentane, isopentane, cyclopentane and a pentene.

3. A method as claimed in Claim 1 or 2, wherein the concentration of polymer in the polymer slurry is from 200 to 700 grams per litre of solvent.

4. A method as claimed in Claim 1, 2 or 3, wherein the polymer slurry contains particles of sizes less than 10 µm and 50 to 2000 µm.

5. A method as claimed in any of Claims 1 to 4, wherein the filter element (3) has an accuracy in the diameter of 20 to 200 µm.

6. A method as claimed in any preceding claim, wherein the filter element (3) is of the step-discoid leaf-disc type.

## Patentansprüche

1. Verfahren zur Gewinnung eines Polymers aus einer Polymer-Aufschlämmung, die ein Ethylen- oder Propylen-Homopolymer oder ein olefinisches Copolymer davon und ein Kohlenwasserstoff-Lösungsmittel mit 3 bis 5 Kohlenstoffatomen umfaßt, durch Hindurchführen der Aufschlämmung durch ein einen Filter enthaltendes Druckgefäß, dadurch gekennzeichnet, daß die Polymer-Aufschlämmung kontinuierlich unter Druck, nach gegebenenfalls durchgeführtem Waschen, einem Filter (1) zugeführt wird, welcher ein Filterelement (3) mit einer filternden Oberfläche aufweist, auf der eine Schicht von Polymerteilchen zurückgehalten wird, und oberhalb deren sich ein Kuchen-bildender Bereich (2) befindet, alles innerhalb eines Hochdruckgefäßes (6), wobei eine Schicht von Polymer-Teilchen auf der filternden Oberfläche zurückgehalten wird, diese Polymerteilchen einen Kuchen innerhalb des Bereichs (2) ergeben und de Kuchen von dem Filter überfließt, so daß er stoßweise oder kontinuierlich als feuchter Kuchen von innerhalb des Gefäßes (6) gewonnen werden kann, und der größte Teil des Lösungsmittels durch den Filter (1) zur Rückgewinnung fließt.

2. Verfahren nach Anspruch 1, wobei das Kohlenwasserstoff-Lösungsmittel ausgewählt ist aus Propylen, Propan, n-Butan, Isobutan, 1-Buten, 2-Buten, Isobutylen, n-Pentan Isopentan, Cyclopentan und einem Penten.

3. Verfahren nach Anspruch 1 oder 2, wobei die Konzentration des Polymers in der Polymer-Aufschlämmung 200 bis 700 g pro Liter Lösungsmittel beträgt.

4. Verfahren nach Anspruch 1, 2 oder 3, wobei die Polymer-Aufschlämmung Teilchengrößen unter 10 Millimikron und und von 50 bis 200 Millimikron enthält.

5. Verfahren nach einem der Ansprüche 1 bis 4, wobei das Filterelement (3) eine Genauigkeit im Durchmesserbereich von 2 bis 200 Millimikron aufweist.

6. Verfahren nach einem der vorangehenden Ansprüche, wobei das Filterelement (3) vom stufen-scheibenartigen Blatt-Scheiben-Typ (step-discoid leaf-disc type) ist.

## Revendications

1. Un procédé de récuperation d'un polymère d'une suspension de polymère comprenant un homopolymère d'éthylène ou de propylène ou un copolymère oléfinique d'éthylène ou de propylène et un solvant hydrocarboné en $C_3$—$C_5$ pa passage de la suspension à travers un récipient sous pression contenant un filtre, caractérisé en ce que la suspension de polymère est introduite en continu sous pression, après lavage facultatif, dans un filtre (1) ayant un élément filtrant (3) ayant une surface filtrante sur laquelle est retenue une couche de particules de polymère et au-dessus de laquelle se trouve une portion formant le tourteau (2), le tout dans un récipient sous haute pression (6), une couche de particules de polymère étant retenue sur la surface filtrante, ces particules de polymère formant un tourteau dans la portion (2) et le tourteau débordant du filtre et étant récupéré de l'intérieur du récipient (6) par intermittence ou en continu sous forme de tourteau humide et la majeure partie du solvant passe à travers le filtre (1) en vue de sa récupération.

2. Un procédé selon la revendication 1, dans lequel ledit solvant hydrocarboné est choisi parmi le propylène, le propane, le n-butane, l-isobutane, le 1-butène, le 2-butène, l'isobutylène, le n-pentane, l'isopentane, le cyclopentane et un pentène.

3. Un procédé selon la revendication 1 ou 2, dans lequel la concentration du polymère dans la suspension de polymère es de 200 à 700 g/lg de solvant.

4. Un procédé selon la revendication 1, 2 ou 3, dans lequel la suspension de polymère contient des particules de moïns de 10 µm et des particules de 50 à 200 nm.

5. Un procédé selon l'une quelconque des revendications 1 à 4, dans lequel l'élément filtrant (3) a une précision dans la gamme de diamètres de 2 à 200 nm.

6. Un procédé selon l'une quelconque des revendications précédentes, dans lequel l'élément filtrant (3) est du type à disque à feuilles discoïdes à gradins.

*FIG.1*

EP 0 141 622 B1

FIG.2

FIG.3